# EUROPEAN PATENT SPECIFICATION

(11) **EP 3 811 176 B1**
(45) Date of publication and mention of the grant of the patent: **13.04.2022**
(21) Application number: 19748949.5
(22) Date of filing: 25.06.2019
(51) Int. Cl.: G05D 16/10, A62B 9/02

(54) **PRESSURE REGULATING DEVICE**
DRUCKREGULIERENDE VORRICHTUNG
DISPOSITIF DE RÉGULATION DE PRESSION

(30) Priority: 25.06.2018 IT 201800006613
(43) Date of publication of application: 28.04.2021
(73) Proprietor: Mares S.p.A., 16035 Rapallo (GE) (IT)
(72) Inventor: ANGELINI, Sergio, 16035 Rapallo (GE) (IT)
(74) Representative: Karaghiosoff, Giorgio Alessandro
(86) International application number: PCT/IB2019/055327
(87) International publication number: WO 2020/003108

(56) References cited:
- DE-A1- 19 812 376

## Description

The present invention concerns a pressure regulating device and, in particular, concerns a regulator first stage for two-stage delivering assembly for underwater use.

Two-stage pressure regulating and air delivering devices are known, for example for underwater use, wherein the first pressure reducing stage is connected to a breathable high pressure gas source, such as a cylinder normally loaded at 200-300 bars, and is able to reduce said pressure to a preset intermediate pressure.

Currently, there are several variants of compensated first stage types which are divided into two macro types. A type uses one or more membranes to transfer the effect of the external pressure on the pressure reducing system. The other type uses a piston instead of the membrane(s).

A first membrane stage for reducing pressure comprises a body provided with an inlet connected to a breathable high pressure gas source and with an outlet for the reduced pressure breathable gas with respect to the gas pressure at the inlet, said body being subdivided into at least one chamber for the high pressure gas, communicating with said inlet, and a chamber for the intermediate pressure gas, connected with said outlet, and the chamber for the intermediate pressure gas being in communication with the chamber for the high pressure gas through a pressure reducing valve.

Said pressure reducing valve comprises a valve seat which separates the high pressure chamber from the intermediate pressure chamber which cooperates with a cut-off, with a flared head connected to a stem, so-named piston-shaped cut-off.

Said cut-off is housed inside the high pressure chamber and is movable axially, i.e. in a direction parallel to its longitudinal axis, alternately in both directions, inside said high pressure chamber, thus the flared head alternatively travels in a direction of detachment and away from the valve seat and travels in a direction towards and in abutment against said valve seat.

A rod is connected with an elastically deformable membrane, which membrane is exposed to the pressure of the external environment and on which an elastic pre-load is further exerted. The elastic pre-load defines, after appropriate calibration, the intermediate pressure value to be added to the ambient pressure. If the elastic pre-load is calibrated on the surface such as to have an intermediate pressure of 10 bars, once the diver descends for example to 20 meters, the intermediate pressure will rise to 12 bars given there is an ambient pressure increase equal to 1 bar per each 10 meters of depth. This compensation of the intermediate pressure with varying depth, such that there is always a constant value (10 bars in the example) to be added to the ambient pressure, is very important for the normal operation of the regulator and is ensured by the presence of the membrane so that the external environment pressure and the elastic pre-load cause a deflection of the membrane itself in the opening direction of the delivering valve when inhaling, which deflection is transmitted to the cut-off by said rod.

In its simpler configuration, the cut-off is pushed in the closing direction by an elastic pre-load present in the high pressure chamber which acts in the direction opposite the elastic pre-load acting on the membrane, which pre-load acting on the membrane in combination with the ambient pressure acting on the membrane is overcome by the combination of elastic pre-load in the high pressure chamber and intermediate pressure acting on the membrane.

When the intermediate pressure is lower than a preset threshold, the summation of the forces acting in the opening direction of the valve prevail on those acting in the opposite direction and the valve opens.

The particularity of the first membrane stages is that the element sensible to the ambient pressure also acts as a physical separator between the intermediate pressure chamber and the environment (i.e. water into which one dives). This fact is appreciated for two reasons:
- whenever diving in contaminated waters, the total separation between the environment and breathable air absolutely avoids a possible contagion;
- whenever diving in very cold waters, it considerably delays problems due to the freezing of the water around the key operating element, i.e. the spring since the expansion of the gas occurs in an area separated from the water through the membrane. This acts as thermal insulator, thus the cooling generated by the operation of the first stage due to the expansion of the breathable gas for the transition from high pressure to intermediate pressure can be successfully dispersed over areas away from the spring. This prevents the risk of ice forming between its coils of the spring which would cause its locking.

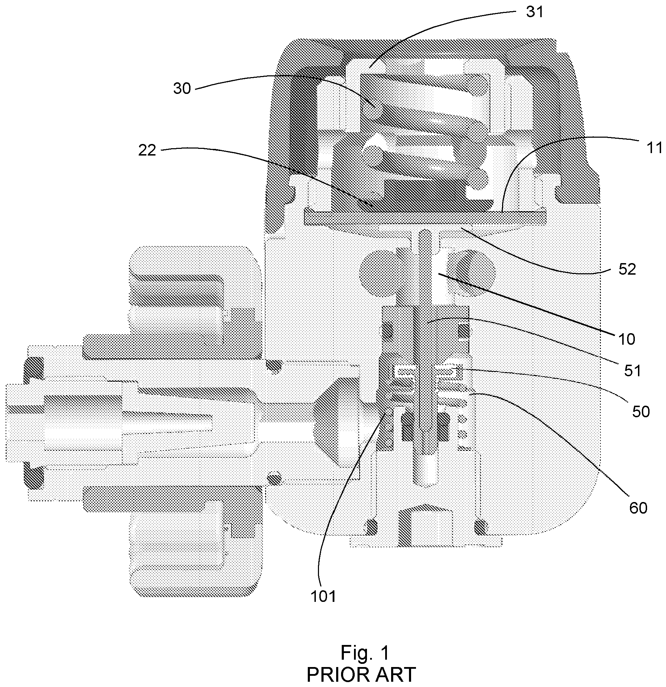

Figure 1 shows a first membrane stage according to the known art. A membrane 11, which seals an intermediate pressure chamber 10 towards the external environment is provided in this type of regulator first stage of a two-stage delivering assembly. The membrane 11 cooperates, on the side exposed to the external environment, with a pre-loading spring 30 which is interposed between a regulatable stationary limit stop 31, for example a threaded ferrule, and a disc 22 supporting the membrane 11 itself. On the side of the membrane 11 facing the intermediate pressure chamber 10, the membrane 11 cooperates with a further disc 52 which is connected to the reducing-valve cut-off 50 between the intermediate pressure chamber 10 and the high pressure chamber 60. The disc 52 is connected to the cut-off 50 by means of a rod 51 which transmits the force generated by the external pressure and by the spring 30 on the membrane 11 to the cut-off. A further elastic pre-loading element 101 acts on the cut-off 50.

In this embodiment, the membrane 11 thus has both the function of transmitting the pressure of the external environment to the cut-off of the pressure reducing valve and the function of sealingly separating the intermediate pressure chamber from the external environment, i.e. from the fluids inside the intermediate pressure chamber and on the outside. The membrane 11 is restrained sealingly tightened between the two corresponding annular tightening parts which cooperate with a peripheral annular strip of the membrane itself.

Instead of using a membrane as an element sensible to the ambient pressure, a first piston stage uses a piston with a flared head, whose narrow part acts as a cut-off of the high pressure against an appropriate seat, and whose large part defines the intermediate pressure chamber. The spring instead of being placed in a separate area, such as in the case of the first membrane stage, it is placed around the piston, which implies the spring being near the area in which the expansion of the gas, and thus the cooling, occur.

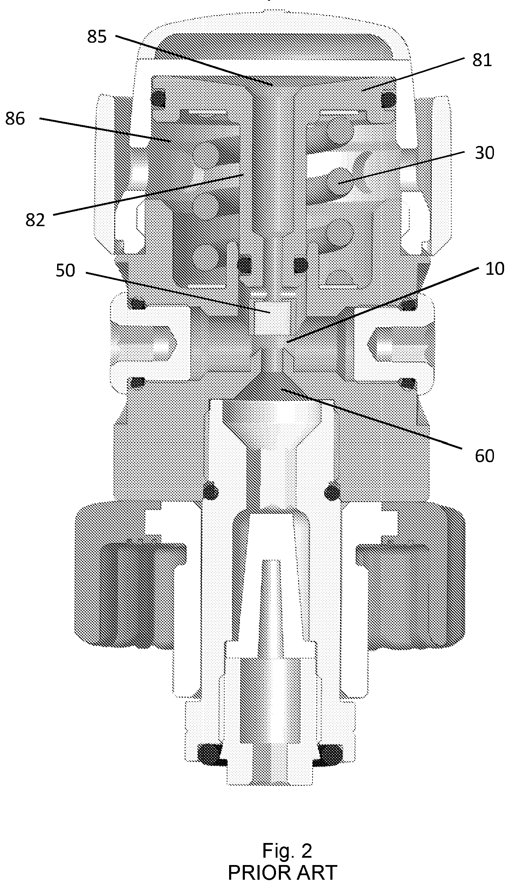

Figure 2 shows a piston regulator first stage, in which a piston 81 sealingly closes an intermediate pressure chamber 10 towards the external environment. The piston 81 cooperates, on the side opposite to the external environment, with a pre-loading spring 30. The piston is sealingly guided slidable by a stem 82 in which a communication duct is provided between the intermediate pressure chamber 10 directly adjacent to the valve seat and a chamber 85 delimited by the head of the piston 81 on the side opposite the chamber 86 communicating with the external environment. The stem 82 bears, on its end opposite the piston 81, the reducing-valve cut-off 50 between the intermediate pressure chamber 10 and the high pressure chamber 60. The piston 81, connected by means of the stem 82 to the cut-off 50, transmits the force generated by the external pressure and by the spring 30 on the piston itself 81 in the opening direction and the force generated by the intermediate pressure in the closing direction.

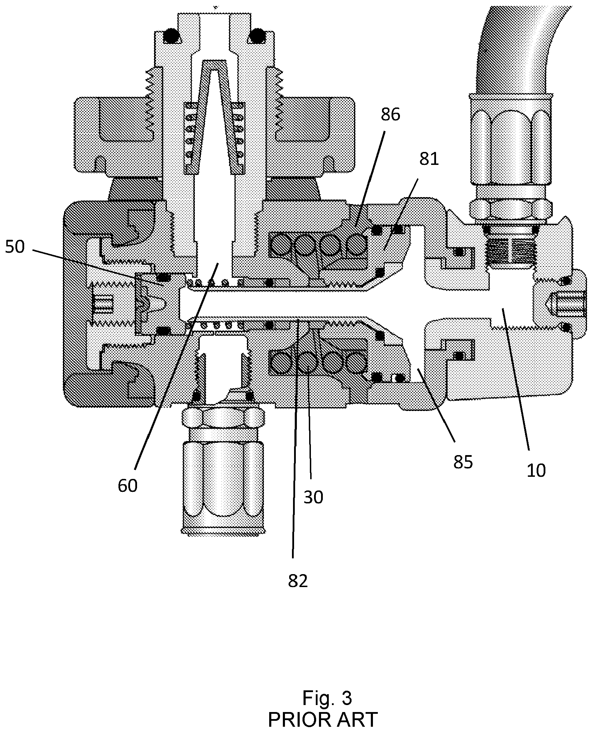

In this type of pressure reducing device, the chamber 86 communicating with the external environment and which houses the elastic element is arranged very near to the area where the breathable gas is expanded. Moreover, the chamber 86 generally necessarily has openings to communicate with the environment, which do not favor a good circulation of the fluid inside the environment, favoring a certain stagnation of the fluid inside the chamber 86 and a progressive cooling during the succession of actions opening and expanding the breathable gas from the pressure of the cylinder to the intermediate pressure (in general, the piston is made of metal, so it transmits the heat well, in this case negative heat, i.e. cold) with high risk that the fluid in the chamber 86 freezes, at least partially preventing the correct operation of the device or even locking it altogether. It should be noted that first piston stages, so-named "balanced," in which the piston is crossed not only by a quantity of breathable gas necessary for establishing the balance of the forces on the piston, but also by the whole flow directed to the second stage, which considerably generates an increase of the cooling effect. Such a solution is shown in the embodiment according to the known art of figure 3.

In terms of the risk of the fluid freezing around the spring, the first piston stage is much more exposed to such effect with respect to the first membrane stage. However, the membrane, being a rubber element with nylon fabrics inside it, could tear if subjected to high pressure differences and/or if subjected to extremely intense use, due to the wearing and tearing of the material of the membrane, which are due to the continuous bending during the movement of the cut-off and while the membrane is contextually subjected to a pressure difference of about 10 bars.

A further problem which could occur in this type of devices is due to the fact that the membrane is generally housed in a chamber communicating with the external environment through an opening and which chamber fills with water. In very low temperature conditions, this water can freeze, with a consequent risk (although very low in the case of the first piston stage) of reducing the operating efficiency of the delivering assembly, since the pre-loading spring of the membrane would be trapped in the ice that formed. This freezing can be caused by the cooling effect deriving from the expansion of the gas passing from the high pressure chamber to the intermediate pressure chamber, in combination with the fact that the water in the chamber, in which the membrane is provided, is stagnant and not subject to good exchange of heat with the water of the external environment.

A third problem of this known configuration consists in the possibility, although remote, of introducing foreign elements inside the housing chamber of the membrane, which foreign bodies could hinder the normal operation of the spring by putting themselves in-between the coils thereof, thus preventing the regular supply of breathable gas to the intermediate pressure chamber according to the need generated by the breathing cycle of the user. This problem is also present in the piston versions.

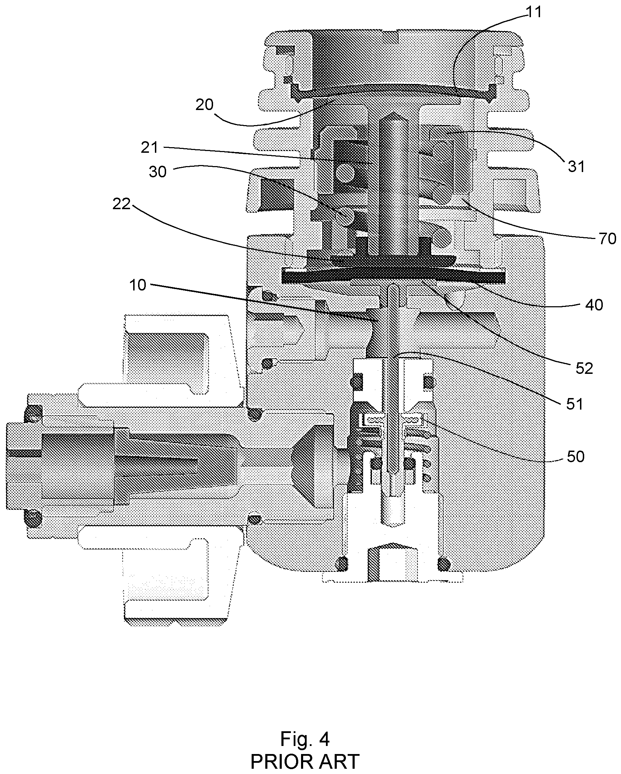

According to an alternative solution, also provided in the known art, it was thought to use an incompressible fluid with a lower freezing point than that of the water that usually fills the housing chamber of the membrane (figure 4) in order to compensate for this type of problem. Such fluid is held back in an intermediate chamber which is delimited by a first membrane towards the external environment and by a second membrane towards the intermediate pressure chamber. These two membranes thus generate a chamber for separating the external environment from the intermediate pressure chamber, whose pressure is the ambient pressure (transmitted through the membrane facing the environment to the fluid placed inside the intermediate chamber). This solution allows to maintain the pressure difference over the two sides of the main membrane constant, equal to the intermediate pressure, but is however not very appreciated by most users given that, when maintaining the equipment, the presence of such fluid, generally oil, can create problems in terms of the cleaning of the parts in contact therewith. Moreover, if the membrane facing the intermediate pressure chamber should tear, this fluid could mix with the breathable gas.

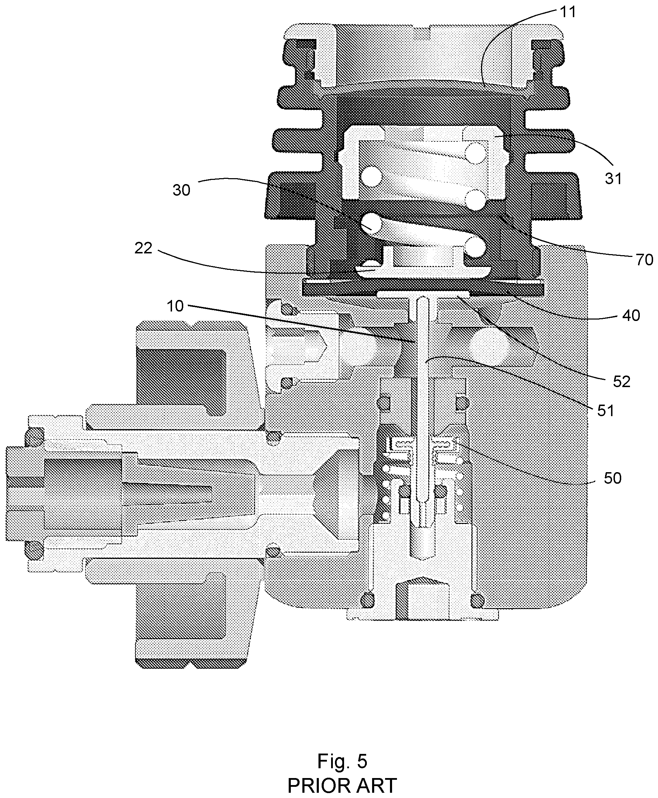

A further alternative solution known in the state of the art is the one shown in figure 5, the same constructive parts or parts with similar functions being denoted by identical reference numbers, such as in figure 4 of the accompanying drawings, wherein a regulator first stage of a two-stage delivering assembly according to a further embodiment of the known art is shown in section. An isolation chamber 70 is delimited towards the external environment by a first membrane 11 which is sealingly restrained along its peripheral edge by the perimeter shell walls of said chamber 70. Towards the intermediate pressure chamber 10, said isolation chamber 70 is separated from the intermediate pressure chamber by a second membrane 40, also sealingly restrained along a perimeter strip by the shell walls of the isolation chamber. A disc 20, to which a pin 21 is integrated, is connected to a further disc 22 loaded by the spring 30 calibrated with the ferrule 31; the disc 22 acts on the membrane 40, which faces the intermediate pressure chamber and transfers the motion of the disc 22 to a disc 52 connected to the rod 51 of the supply valve 50. The membrane 11 isolates the chamber interposed between the discs 20 and 22 from the environment. This way, it is possible to isolate the chamber housing the pre-loading spring of the membrane 30 and the ferrule 31 regulating the pre-load of the external environment, thus preventing the drawbacks of the preceding solutions of the known art and, simultaneously, allowing to detect the pressure variations by means of the discs 20, 22 which communicate with the membrane 40.

Moreover, this alternative configuration of the device according to the known art, does not fully meet the functional requirements and has some problems, among which, in particular, the problem related to the stresses that the two membranes 11 and 40 must withstand, given that both of the membranes feel atmospheric pressure (1 bar) on one side (the one facing the spring) and ambient pressure or ambient pressure + intermediate pressure, respectively, on the other. This especially due to the fact that at the deepest depths, the pressure difference, and thus the mechanical differential to which the membranes are subjected, is definitely important. If, as already mentioned above, the main membrane risks to tear in view of a constant pressure difference of only 10 bars (when exposed to the environment), it will be even greater if the isolation chamber is provided and the pressure difference over the membrane increases of 1 bar every 10 m of depth. Similarly, the secondary membrane 11 placed between the environment and the disc 20 feels the difference between the ambient pressure and the atmospheric pressure during the assembly of the regulator.

DE 198 12 376 A1 (STOFFER NORBERT [DE]; NORDHORN MARTIN [DE]) 23 September 1999 (1999-09-23) describes a pressure regulator for compressed air breathing apparatus. Since only a small amount of gas can flow from a high pressure area into a valve cartridge through a narrow gap between a frustoconical recess and a conically widened area of a valve stem, the gas pressure in an area of the valve cartridge or a space is reduced in pressure. A piston comprising a piston rod with a piston head on one end and circular disc on the other end is provided between cylindrical walls of the regulator. A separation wall with a hole in which the piston rod axially moves divides the space between the piston rod and a circular disc in two spaces. One space is filled with gas to exert a force on the piston rod via the piston head. An external pressure exerts an additional compressive force on the piston rod via the circular disc. The piston exerts a force on the valve stem corresponding to the compressive force of external pressure on the circular disc in addition to the compressive force of the gas on the piston head.

Object of the present invention is to provide a regulator first stage for two-stage delivering assemblies that is able, by means of a constructively simple solution, to overcome the drawbacks illustrated above, by ensuring the possibility to avoid possible freezing on one hand, and to avoid using a fluid with low freezing point on the other, without the possibility to run into the problems related to the wearing of the components. More simply, the present invention ensures the impossibility of tearing the membrane.

Object of the present invention is thus a regulator first stage for two-stage delivering assemblies, comprising
a first chamber for a breathable high pressure gas, the chamber being connected or able to be connected through an inlet to a high pressure gas source;
a second chamber for the breathable gas at an intermediate pressure, which chamber for the intermediate pressure gas has an outlet for the intermediate pressure gas and being connected or able to be connected to a user of said intermediate pressure gas;
a pressure reducing valve which connects said first chamber and said second chamber with each other and which valve comprises a valve seat having an opening for the communication between said first and said second chambers and a cut-off cooperating with said valve seat and displaceable from a closed position of said passage opening to an open position of said passage opening and vice versa,
said cut-off being dynamically connected to a sensor member exposed to the pressure of the external environment of said two chambers, which member comprises a transmitting mechanism to transmit the mechanical stress exerted on said sensor member by the pressure of the external environment of the cut-off itself and wherein
according to the invention, said sensor member of the external environment pressure consists of at least one movable wall element which is sealingly slidable in a housing chamber, and which constitutes the interface wall of said housing chamber towards the external environment,
and wherein said transmitting mechanism connects said movable wall with said cut-off.

Preferably, according to an embodiment, said movable wall element is made of a rigid material, in particular of a high mechanical resistance material such as for example stainless steel or chrome-plated brass.

According to a preferred embodiment, said movable wall element is exposed directly towards the environment substantially with the whole surface of the contact face with the external environment.

According to an embodiment, said sensor member and said housing chamber are of the cylinder/plunger type.

In particular, an embodiment provides that said sensor member is in the form of a plunger housed in a housing chamber acting as a cylinder, while the plunger is sealingly guided along the walls of the cylinder thanks to peripheral sealing gaskets, for example one or more O-rings or gaskets used in cylinder/plunger units.

According to an embodiment, the sensor member formed by a plunger constitutes a movable base of the housing chamber formed by the cylinder, said sensor member being displaced inside said cylinder in parallel to itself and along the direction of the cylinder axis, said cylinder axis being at least parallel or coaxial to the displacement direction of the reducing-valve cut-off between said two opening and closing positions of the passage opening of the valve seat, the transmission members consisting of a rod connecting the sensor member with the cut-off.

An embodiment provides that said connecting rod is constituted by a rigid element.

Moreover, an embodiment provides that the axis of the passage opening of the valve seat is coincident with or parallel to the axis of the cylinder forming the housing chamber of the sensor member, while the cut-off consists of a sealing element mounted on a piston sliding in a cylindrical seat, the piston and the seat, i.e. the sliding direction of the cut-off, are parallel to or coincident with said axis of the passage opening of the valve seat and/or with the axis of the cylinder forming the housing chamber of the sensor member.

An advantageous embodiment provides that the high pressure chamber, the intermediate pressure chamber, the housing chamber, the pressure reducing valve seat and/or the opening passage in said seat, the piston-shaped cut-off and the seat of the guide seat thereof, the sensor member, the connecting rod between said sensor member and the piston-shaped cut-off all have a rotational symmetry and are coaxial with each other.

In this case, the connecting rod extends through the passage opening of the pressure reducing valve seat.

Moreover, according to a further characteristic which can be provided in any combination with one or more of the preceding characteristics, an elastic pre-loading element is combined with the reducing-valve cut-off.

Similarly, according to a characteristic, an elastic pre-loading element is also combined with the sensor member.

The aforesaid elastic pre-loading elements have the same functions and operate in the same manner as those provided in the known devices and respectively combined with the pressure reducing valve cut-off and the membrane interfacing with the external environment.

According to a further characteristic which can be provided in combination with any one or more of the preceding characteristics, the intermediate pressure chamber is provided interposed between the valve seat separating the intermediate pressure chamber from the high pressure chamber and a movable wall element, which further separates the intermediate pressure chamber from the housing chamber of the elastic pre-loading element subject to flooding by the fluid in the external environment.

The aforesaid embodiments solve the problem exposed above, related to the occurrence of damages, i.e. breakages, tears or cracking of the membrane that transmits the external pressure to the cut-off of the pressure reducing valve by using, instead of the membrane(s) in the respective devices according to the known art, a rigid element of the plunger type which can sealingly slide along a rectified wall and whose position is determined by the pressure of the external environment depending on the pressure conditions in the intermediate and/or high pressure chambers and to the pre-loads of the elastic elements acting on said rigid element and/or on the cut-off.

The invention provides that the sensor member of the external environment pressure consists of two movable wall elements which are spaced apart from each other thanks to mutual connecting means in parallel with the sliding direction, one of said movable wall elements constituting the interface with the external environment and the other one constituting the interface with the housing chamber of said two movable wall elements towards the intermediate pressure chamber and both sealingly delimiting, respectively towards the external environment and towards the intermediate pressure chamber, an interposition chamber which consists of a housing chamber portion having variable position and whose extent, in the sliding direction of the two movable wall elements, substantially corresponds to the distance between said two movable wall elements.

According to an embodiment, there is a pressure of a fluid, typically air, which is set at a preset value and substantially invariable with respect to the pressure conditions of the external environment and of the high pressure and intermediate pressure chambers, preferably, there is ambient air at atmospheric pressure in the interposition chamber.

That which is provided relatively to the first embodiment, in particular relatively to the dimensions of the face exposed to the external environment fluid of the corresponding movable wall, is also valid for this embodiment.

Moreover, it is possible that the aforesaid characteristics are also applied according to the dimensions of the contact face of the further movable wall element exposed to the fluid in the intermediate pressure chamber.

An embodiment provides that the two movable wall elements are rigidly connected to each other, for example by means of a connecting rod of preset length.

Similarly to that which is provided for the preceding example not covered by the claims with only one movable wall element, each of the movable walls is in the form of a plunger housed in a housing chamber acting as a cylinder, whereas both of the plungers are sealingly guided along the walls of the cylinder thanks to peripheral sealing gaskets, for example one or more O-rings or gaskets used in cylinder/plunger units.

According to an advantageous embodiment, the two movable wall elements, i.e. the two plungers, are displaceable together and are connected in a couplable manner, having, on the opposite faces, a first movable wall element, at least one stem, and the second movable wall element a bushing-shaped engagement seat of said stem axially coinciding with said stem.

An advantageous embodiment provides that the stem has a base portion with which it connects to the corresponding movable wall element and a diameter greater than a terminal coaxial portion, and that the engagement seat has an outer diameter corresponding to the outer diameter of said base of the stem and a coaxial hole of a diameter corresponding to that of the terminal extension of the stem and whose depth is at least substantially identical or slightly greater than that of said terminal portion of the stem.

Still according to a characteristic, the base of the stem connects with a conically tapered length to the terminal portion, while the seat has an inlet length which conically narrows from the inserting end towards the bottom of the hole starting from the outer diameter of the bushing towards the inner diameter thereof and with an opening angle corresponding to that of the tapered length of the stem.

Still according to a further characteristic, the bushing-shaped engagement seat is combined with the wall element, i.e. with the plunger interfacing with the intermediate pressure chamber, and constitutes a central supporting element of the elastic element, for example a coil spring.

The integral connection of the two movable wall elements, i.e. of the two plungers, can occur thanks to removable coupling means, i.e. separable. A preferred embodiment provides movable wall elements of rotational symmetry form, i.e. circular with reference to an axis parallel to their translation direction in the chamber, which respectively have a stem and an engagement seat coaxial and with circular or cylindrical section.

According to a further characteristic, both said movable elements can be displaced inside said cylinder in parallel to each other and along the direction of the cylinder axis, said cylinder axis being at least parallel or coaxial to the displacement direction of the reducing-valve cut-off between said two opening and closing positions of the passage opening of the valve seat, the transmission members consisting of a rod connecting the sensor member with the cut-off.

An embodiment provides that said connecting rod is constituted by a rigid element.

Similarly to the embodiment previously described, the axis of the passage opening of the valve seat is coincident with or parallel to the axis of the cylinder forming the housing chamber of the sensor member, while the cut-off consists of a sealing element mounted on a piston sliding in a cylindrical seat, the piston and the seat, i.e. the sliding direction of the cut-off, are parallel to or coincident with said axis of the passage opening of the valve seat and/or with the axis of the cylinder forming the housing chamber of two movable walls.

An advantageous embodiment provides that the high pressure chamber, the intermediate pressure chamber, the housing chamber, the pressure reducing valve seat and/or the opening passage in said seat, the piston-shaped cut-off and the seat of the guide thereof, the sensor member, the two movable walls of the sensor member, the connecting rod between said sensor member and the piston-shaped cut-off all have a rotational symmetry and are coaxial with each other.

In this case, the connecting rod extends through the passage opening of the pressure reducing valve seat.

Moreover, according to a further characteristic which can be provided in any combination with one or more of the preceding characteristics, an elastic pre-loading element is combined with the reducing-valve cut-off.

Similarly, according to a characteristic, an elastic pre-loading element is also combined with the sensor member, said pre-loading element advantageously being positioned inside the interposition chamber delimited by the two movable wall elements.

An embodiment provides that the elastic element acts on the movable wall element interfacing towards the intermediate pressure chamber on the face thereof inside the interposition chamber and that the stationary limit stop for said elastic pre-loading element is also arranged inside said interposition chamber and fixed or fixable in a stable position in said interposition chamber, while a passage opening is provided for the element connecting the two movable walls with each other according to any one of the possible embodiment variants previously described and/or described below with reference to the figures.

The aforesaid elastic pre-loading elements have the same functions and operate in the same manner as those provided in the known devices and respectively combined with the pressure reducing valve cut-off and the membrane interfacing with the external environment.

According to an embodiment variant, which can be provided both in the embodiment not covered by the claims in which the sensor member consists of only one movable wall element and in the embodiment wherein said sensor member is provided with an axially spaced apart couple of movable wall elements, a sealing flexible membrane is arranged between the movable wall element forming the interface towards the external environment and said external environment.

This membrane has the purpose of isolating the sliding area of the movable element from water, salt, sand and possible contaminating elements in the water, by achieving a total separation between the external environment and the environment through which the breathable gas passes.

Thanks to the second embodiment with the two movable wall elements delimiting an interposition chamber isolated from the external environment and from the intermediate pressure chamber, it is possible to provide a preset stable pressure, and in particular air at atmospheric pressure generated during the assembly, inside this interposition chamber. This condition ensures that the elastic element provided in the interposition chamber always operates dry and can thus always work without a risk of freezing or deposits of impurities that could get trapped in-between the coils, stopping their functionality.

By providing two movable walls in the form of plungers in a cylinder and by adapting the sections of the cylinder in the sliding lengths of the respective movable walls to the section of the corresponding movable wall, it is possible to provide different configurations:
a) The two movable walls have the same diameter, the compensation of the ambient pressure is 1:1;
b) The surface of the movable wall interfacing with the external environment is slightly greater to achieve an increase of the intermediate pressure with an increasing depth greater than the simple increase due to the ambient pressure.
c) The surface of the movable wall interfacing with the external environment is less to achieve an increase of the intermediate pressure lower than the one that would be due to the simple increase of ambient pressure.

These options can be selected during the manufacturing and can be obtained by using a device configured for the condition in which the surface of the movable wall element constituting the interface with the environment is greater and providing a kit of jackets, of the inner bushing type, varying the inner section of the housing chamber, at least in the sliding area of said movable wall, which are each provided in combination with a movable wall element of corresponding dimensions, thus, in the basic configuration, the pressure regulator can be modified at preset increasing steps to achieve the further configurations described above and thus a reduction of the cylindrical chamber and of the movable wall element from the configuration of point b) to that of point a) in a single step or in more discrete steps of reduction of the surface of the movable wall and from the configuration of point a) to that of point c) also in a single step of reduction or by means of more steps of reduction of the surface of the movable wall element, a combination of bushing being provided to reduce the inner section of the housing chamber of the sensor member, for the portion of the travel of the corresponding movable wall element interfacing with the external environment and said corresponding movable wall element for each step of reduction.

As is clear, thanks to the first embodiment not covered by the claims wherein only one sealingly movable wall element is provided as a sensor member interfacing with the external environment pressure, a slightly more costly, but mechanically safer first stage is obtained.

With the second embodiment providing the isolation chamber, all the benefits of a classic membrane regulator (isolation between the external environment and environment in which the breathable gas moves as well as better resistance to the cold, especially with respect to a classic first piston stage, as shown in the figure 2 or 3 of the known art) are achieved, but with the toughness and robustness of a first piston stage and moreover even more resistant to the cold, without compromising the integrity of the components and eliminating the possibility that impurities and dirt are introduced in-between the coils of the spring.

It is also possible to provide an embodiment of the pressure regulator first stage that substantially corresponds to the second embodiment in which two movable wall elements spaced apart from each other are provided as the sensor member of the external environment pressure, thanks to mutual connecting means in parallel to the sliding direction, one of said movable wall elements constituting the interface with the external environment and the other as the interface with the housing chamber of said two movable wall elements towards the intermediate pressure chamber, whereas only the movable wall element constituting the interface towards the intermediate pressure chamber is sealingly guided in the housing chamber and the movable wall element that instead constitutes the interface with the external environment does not have sealing gaskets slidingly adhering with the wall of the housing chamber, the seal of this movable wall element relatively to the external environment being made thanks to a flexible membrane which is sealingly restrained in a position adhering against the side of the movable wall element facing the external environment.

This solution is a solution that combines the characteristics of the known art with the characteristics of the present invention and it has the advantage of reducing friction between the sensor member, a sealingly sliding gasket being provided for only one of the movable wall elements, but to nonetheless of generating a constant intermediate pressure isolation chamber which prevents the flow of water and with it of impurities or dust particles in the area of the elastic pre-loading element of the sensor member of the external pressure. Thanks to this preset pressure in the isolation chamber, it is possible to limit the pressure difference between the external environment pressure and that of the isolation chamber which act on opposite sides of the membrane and thus to limit the risk of breaking or tearing the membrane itself. The membrane is also supported for most of its extension by the movable wall element.

In combination with this embodiment, any one of the combinations of characteristics previously described can be provided with reference to the other embodiments and, in particular, to the embodiment with two movable wall elements both sealingly sliding in the housing chamber.

Further advantages and characteristics of the device according to the present invention will become clearer in the following detailed description of an embodiment thereof, made by way of example and without limitations, with reference to the accompanying tables of drawings, in which:
figure 1 shows a sectional view according to a plane passing through the symmetry axis parallel to the displacement direction of the pressure reducing valve cut-off and which view is relative to a first embodiment of the known art which uses a membrane.
figure 2 shows a sectional view according to a plane passing through the symmetry axis parallel to the displacement direction of the pressure reducing valve cut-off and which view is relative to a second embodiment of the known art corresponding to a so-named first piston stage.
Figure 3 shows a sectional view according to a plane passing through the symmetry axis parallel to the displacement direction of the pressure reducing valve cut-off and which view is relative to a third embodiment of the known art.
figure 4 shows, similarly to the preceding figures, a further embodiment according to the state of the art.
Figure 5 shows an embodiment variant of the embodiment of the state of the art according to figure 4.
Figure 6 shows a view similar to that of the preceding figures of a first embodiment not covered by the claims which consists in the improvement of the first embodiment according to the known art shown in figure 1.
figure 7 shows, similarly to figure 5, a second embodiment of the invention which consists in the improvement of the third embodiment according to the known art shown in figure 5.

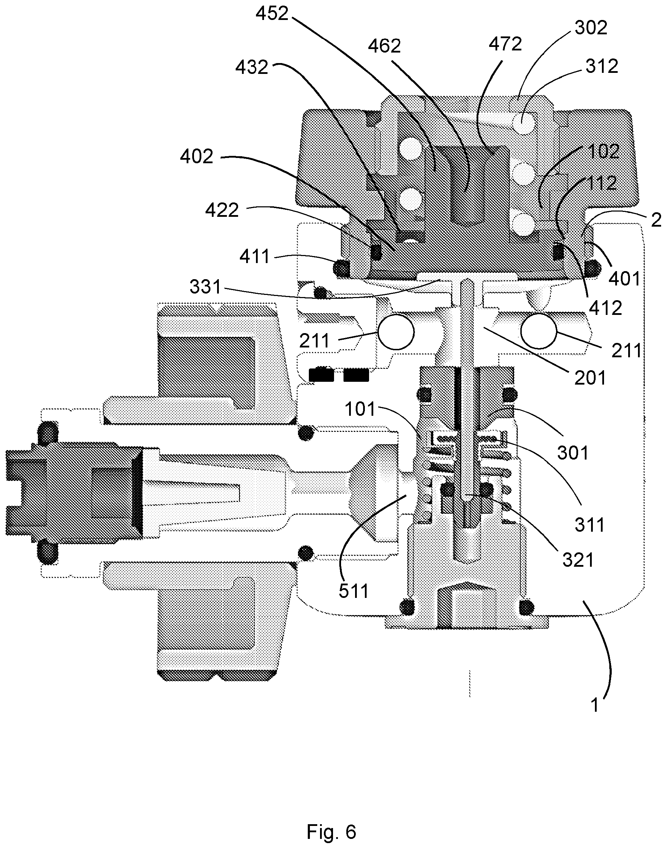

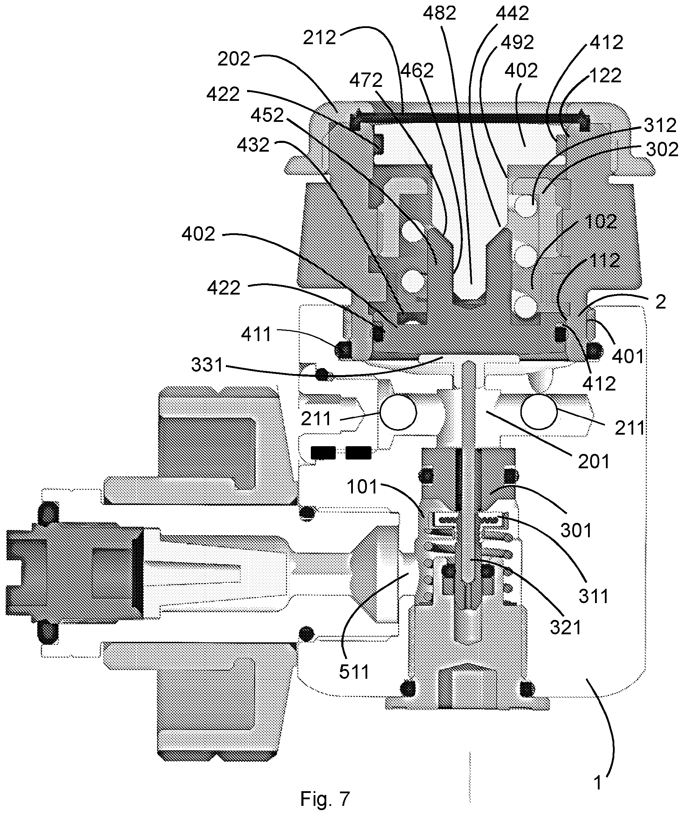

The first and second embodiments shown in figures 6 and 7 comprise a combination of all the characteristics provided therefor and refer to a preferred configuration which must not however be considered limiting with respect to the combinations of characteristics denoted in the various embodiment variants in the introduction of the present description. For example, figure 7 shows a membrane 212 which does not constitute an essential characteristic of the device and which can thus be missing in an embodiment of the invention. Similarly, the selection of a configuration of rotational symmetry of the device is a preferred choice, but it must not be understood as a limiting form. Also the use of coil springs as elastic pre-loading means, and the particular solution of the corresponding parts regulatable by screwing to modify the pre-loading force, is a preferred solution, but it must not be understood as limiting.

Figure 6 shows a first embodiment of the regulator first stage not covered by the claims ; 1 denotes the body of said first stage, which has a high pressure chamber 101 provided with a plurality of inlets 511 to which a high pressure breathable gas source is connected, not shown in the figure and known as a high pressure breathable gas supply cylinder. The reducing valve seat 301, which leads into the intermediate pressure chamber 201, and whose flow is regulated by the cut-off 311, is placed in the chamber 101. The cut-off 311 is connected to a stem 321, which ends on the opposite end, inside the chamber 201, with a disc 331. The intermediate pressure chamber 201 is provided with a plurality of outlets denoted by 211 in the figure.

At the top of the intermediate pressure chamber 201, a threaded opening 401, in which the sealing lock 2 is screwed thanks to the gasket 411, is formed in the body 1 of the first stage. A cylindrical chamber 102 housing a movable wall element 402 is formed in the lock 2. The movable wall element 402 according to this preferred embodiment has a rotational symmetry and is in the form of circular plunger which is displaceable in the direction of its axis inside a ground length 112 inside the cylindrical chamber 102. The movable wall element 402 sealingly slides, thanks to an annular peripheral gasket 422, along the ground cylindrical wall 112. The travel is limited at least on one side by a limit stop 130. The end opposite to the travel is delimited by the abutment position of the cut-off against a limit stop inside the high pressure chamber. The two travel limit positions are axially spaced apart from each other, i.e. spaced apart in the displacement direction of the movable wall element 402. The gasket 422 is inserted in a toroidal throat 412 provided in the shell edge of the movable wall element 402.

An annular groove 432 is formed on a face of the movable wall element 402; such groove is intended to cooperate with a pre-loading coil spring 312. A ferrule 302, which is screwed to the lock 2, inside the chamber 102 at a given axial distance from the movable wall element 402, constitutes the stationary limit stop against which abuts the end of the coil spring 312 opposite the one leaning against the movable wall element 402.

The rod 321 rigidly connecting the movable wall element 402 to the cut-off 311 passes through coaxial holes of the cut-off 311 itself, which form the travel limit stop of the plunger in the cylindrical chamber 102 in which said plunger 402 is housed. Advantageously, the rod 321 is not mechanically connected to the movable wall element but rests against it, optionally and preferably thanks to a terminal disc 331.

According to a further characteristic, a bushing 452 departs on the side of the movable wall element 422 facing the external environment, i.e. opposite to the intermediate pressure chamber 201, in a position coaxial to said movable wall element 422 which, in the embodiment, is in the form of a cylindrical plunger. This bushing has a diameter identical to or slightly less than the diameter inside the coil spring 312 which is slipped above it. Said bushing has a central hole 462 which conically widens 472 towards the end opposite to the one connecting to the movable wall element 402.

In an embodiment, the conical length can extend over the whole thickness of the wall of the bushing 462.

The operation of the regulator first stage according to the present invention will become clearer hereunder. On the basis of the problems highlighted in the state of the art, in the solution suggested according to the embodiment of figure 6, it was intended to replace a flexible wall, such as that of the membrane 11 shown in figure 1, with a system for transmitting the pressure variations inside the intermediate pressure chamber, dependent on breathing cycles and on the pressure variations of the environment outside of the device, which is not easily subject to wear of the mechanical type and which is simultaneously able to react just as efficiently.

Preferably, the movable wall element 402 in its embodiment as a plunger that is sealingly and slidingly inserted in the appropriately rectified seat 112 is able to transfer, substantially without inertia, the pressure variation of the external environment perceived by the movable wall element 402 itself inserted in the seat 112. The behavior of the movable wall, here constituted in the form of plunger 402, is even more effective than that of the membrane which, by nature, tends to bend in an uneven manner, whereas the plunger, which slides with respect to the seat in which it is positioned, offers its whole surface to the fluid with which it is in contact.

The solution of the embodiment not covered by the claims according to figure 6 thus overcomes the problems of the know art in terms of mechanical robustness, thus preventing the risk of malfunctions due to the breakage of the membrane in the devices of the known art. Moreover, it accurately defines the surface exposed to the external environment pressure transferring it to the cut-off, since the extension of the active surface on which the pressure acts is accurately delimited and thus the pressure is transformed with as much accuracy into a force, whereas in the devices of the known art, the active surface defined by calculating the force caused by the external environment pressure is subject to being inaccurate due to the deformations of the membrane in the peripheral areas thereof.

Figure 7 shows a second embodiment which constitutes the improvement according to the invention of a regulator first stage according to the configuration of the known art shown in figure 5.

The same reference numbers as those used in figure 6 will be used in figure 7 for identical parts or having the same function.

1 denotes the body of said first stage, which has a high pressure chamber 101 provided with a plurality of high pressure outlets, for example for connecting pressure gauges or other utilities, and is connected, in a known manner not shown in the figures, to the high pressure breathable gas supply cylinder. The reducing valve seat 301, which leads into the intermediate pressure chamber 201 and which flow is regulated by the cut-off 311, is placed in the chamber. Also in this embodiment, the cut-off is coupled to the stem 321, which ends on the opposite end inside the chamber 201, with a disc 331. The intermediate pressure chamber is provided with a plurality of outlets 211.

At the top of the intermediate pressure chamber 201, a threaded opening 401, in which the sealing lock 2 is screwed thanks to the gasket 411, is formed in the body 1 of the first stage. A cylindrical housing chamber 102 of a sensor member of the external environment pressure is formed inside the lock 2.

Said chamber 102 is provided with two ground cylindrical seats 112 and 122, respectively facing the intermediate pressure chamber 201 and the external environment and separated by a threaded length in which a stop ferrule 302 for an elastic pre-loading coil spring 312 of the sensor member of the external environment pressure is screwed.

A plunger-shaped movable wall element 402 is respectively inserted inside both seats 112, 122. The two movable wall elements shown in figure 7 are identical to one another, in particular with respect to the surface of the two faces perpendicular to the translation direction, i.e. to their central axis.

Such configuration must not be understood as limiting, but is only a choice among the possible variants in which said movable walls 402 can have different diameters, as described in the introduction of the present description, to affect the variation of the intermediate pressure at the varying of the ambient pressure.

According to a preferred embodiment, the two movable wall elements 402, i.e. the two plungers, are displaceable together and are couplably connected, respectively having, on sides opposite each other, the movable wall element 402 constituting the separation wall towards the external environment a coupling stem 482, and the second movable wall element 402 interfacing with the intermediate pressure chamber 201 a bushing-shaped engagement seat 452 of said stem axially coinciding with said stem 482, in particular coaxial thereto.

A preferred embodiment can further provide that the stem has a base portion 492 with which it connects to the corresponding movable wall element 402. This base portion has a diameter greater than a coaxial terminal portion which is intended to be engaged in a hole 462 of the engagement seat 452 and to be locked therein. The axial length of the hole 462 is proportioned with the axial length of said terminal portion of the stem 482.

According to a further possible characteristic and also as shown, the engagement seat 452 is cylindrical bushing shaped and has an outer diameter corresponding to the outer diameter of said base 492 of the stem 482. The coaxial hole 462 has a diameter corresponding to that of the terminal portion of the stem 482.

Still according to a characteristic, the base 492 of the stem 482 connects with a length 442 conically tapered to the terminal portion, while the seat 452 has an inlet length 472 which conically narrows from the inserting end towards the bottom of the hole 462, starting from the outer diameter of the bushing forming said engagement seat 452 towards the inner diameter thereof and with an opening angle corresponding to that of the tapered length 442 of the stem 482.

Still according to a further characteristic, the bushing-shaped engagement seat 452 is combined with the wall element 402, i.e. with the plunger interfacing with the intermediate pressure chamber 201, and constitutes a central supporting element of the elastic element 312, for example a coil spring.

The rigid integral connection of the two movable wall elements 402, i.e. the two plungers, can occur thanks to removable and/or separable mechanical coupling means which allow to separate the two plungers from each other, i.e. the two movable wall elements.

With regard to the rigid connection of the two movable wall elements, it is possible to provide other alternative solutions. According to an embodiment variant, the two plunger-shaped movable wall elements 402 are rigidly coupled to each other by means of a pin screwed with the two ends respectively in a threaded cup formed coaxially thereto in the faces of the two movable wall elements 402 facing each other.

Similarly to the movable wall element of the embodiment according to figure 6, also in this embodiment, each plunger 402 of substantially cylindrical shape has a toroidal throat 412 formed on the side surface, in which a sealing element 422 is housed. An annular groove 432, surrounding the engagement seat 452, is formed on a face of the movable wall 402 interfacing with the intermediate pressure chamber 201. The end of a pre-loading spring 312, whose opposite end abuts against the stop ferrule 302 screwed to the lock 2 inside the chamber 102 at an intermediate position in-between the ground cylindrical lengths 112 and 122, is inserted in said annular groove.

Thanks to this embodiment, an intermediate isolation chamber, which remains sealed both towards the intermediate pressure chamber and the external environment, is generated in the cylindrical chamber 102 of the lock 2 and between the intermediate pressure chamber and the external environment. This isolation chamber translates correspondingly to the translation of the two plungers 402 rigidly connected to each other. The translation of the plungers 402 is delimited in both directions by annular, radial and inner shoulders defining the translation travel limits of which one is constituted by the shoulder 130 cooperating with the plunger 402 interfacing with the intermediate pressure chamber 201 towards the outside, whereas the other is constituted by a limit stop of the cut-off in the high pressure chamber and/or by the head side of the cylindrical chamber 102 cooperating with the disc 331 towards said intermediate pressure chamber.

It is clear that such ferrule 302 and said coil spring 312 always remain inside the isolation chamber and are thus separated from the external environment and from the intermediate pressure chamber. Moreover, it is clear that the pressure in the isolation chamber can be maintained at a substantially constant desired level. As per the fluid, it is possible to provide different fluids, but ambient air is preferred at the atmospheric pressure automatically generated during the assembly step in the factory.

However, this does not mean that different types of fluids or mixtures thereof and different pressure conditions in said isolation chamber can't be provided and that possibly said isolation chamber cannot be accessible through an inlet provided with removable sealing means.

A preferred embodiment provides that the isolation chamber between the two movable wall elements is filled with argon or with a gas mixture containing argon since this inert gas has optimal thermal insulation qualities, thus improving the safety against the formation of ice on the walls of the "upper piston" facing the environment.

Thus, it is clear that the coil spring and the area in which it is housed remains free from the risk of ice formations and also from the risk of impurity, dirt or other infiltrations that can mechanically limit or completely hamper the operation of the spring.

Still according to a characteristic shown which is fully optional and which could be omitted, a flexible membrane 212 adhering to the face of the movable wall element 402 facing the external environment and interfacing therewith, is arranged at the end of the lock 2 in which the seat 122 is obtained by means of a threaded ferrule 202. The external environment pressure acts on the movable wall element 402 through said membrane 212 which deforms under the action of said pressure and the membrane is only intended to isolate the chamber 102 only in terms of the fluids circulating which can generate wear or decay effects on the sealing gaskets of the movable wall 402 against the wall of the cylindrical chamber 122 in which it is housed both from a chemical point of view and due to the transport of granules of material.

The embodiment shown in figure 7 is thus a solution that isolates the compensation chamber 102 with respect to the external environment, and the membrane 212 resting directly on the movable wall element, de facto accurately transmits in a determinable precise manner the pressure variations of the environment outside the piston 402, whereas it avoids the direct contact of the external environment fluid with the plunger 402 and the sealing gaskets, protecting them. Advantageously, especially from a productive point of view, relatively to the embodiments shown, the movable wall element 402 interfacing with the intermediate pressure chamber can be identical for both the embodiments, only making it necessary to provide the other movable wall element to make the embodiment of figure 7.

The piston inserted in the seat facing the intermediate pressure chamber is elastically preloaded thanks to the spring 312, as occurred for the membrane used at the state of the art. The rigid connection between the two pistons 402 in fact ensures the action of the two movable walls like that of a monolithic entity, which transfers the pressure variations detected in the external environment directly to the rod 321 which operates on the reducing-valve cut-off.

An embodiment variant of the embodiment according to figure 7 can provide that the movable wall element, i.e. the plunger 402 constituting the interface with respect to the external environment and which is in contact with the membrane 212, freely and non-sealingly slides in the cylindrical length 122 and that the seal towards the external environment of the intermediate isolation chamber delimited by the two movable wall elements 402 is entrusted only to the membrane 212 on the side facing the external environment. This reduces the sliding friction and, anyhow, the upper membrane is the less stressed one since it is not exposed to the full pressure difference towards the 10 bars of intermediate pressure.

In this case, the presence of a constant pressure inside the intermediate isolation chamber allows to limit the pressure difference between the outside and inside of the intermediate chamber and which acts on the membrane 212 itself. Moreover, the membrane 212 rests, almost throughout its whole surface exposed to the external pressure, against the face facing the outside of the movable wall element 402.

Thus, functionally, the membrane 212 is less mechanically stressed and subjected to breakage due to the wearing of the material and, moreover, the movable wall element 402 on the side interfacing with the intermediate pressure chamber being sealingly slidable in the cylindrical chamber 112, a breakage of the membrane 212 would only involve the flooding of the compartment containing the coil spring and the pre-loading ferrule and thus the drawbacks in the event of dust particle infiltrations, which can degrade the operations of the coil spring 312. However, aside from these drawbacks, the regulator would remain fully operational since the seal of the intermediate pressure chamber towards the external environment and thus against flooding would be ensured by the wall element 402 provided with the sealingly gasket sliding against the cylindrical wall 112.

With regard to the rigid implementation of the rod connecting the two movable wall elements, such solution is the preferred one shown in figure 7, but when desired, the connection between the two plungers 402 can also be made such as to be able to be regulated or elastically shortened or elongated in condition of a preset condition of the ratios between the intermediate pressure and the external environment pressure.

As is clear in the comparison of the previous description with the known art, it appears that, in the embodiment variant provided with the membrane, the embodiment of figure 7 overcomes the drawback of the known art, wherein the action of the external environment pressure, i.e. the water, is exerted directly on the membrane and in turn from it onto the flared heads 20 and 22, thus it doesn't seem more difficult to establish the force ratios transmitted by the rigid element 21. Moreover, the drawback of the known art relative to the fact that in the known art stresses, which lead to a premature breakage of the membrane itself and to the loss of seal with a possible penetration of the environment, i.e. water not only upstream of the second membrane, but also in the event it breaks in the intermediate pressure chamber, are generated in the peripheral sealing tightness area of the membranes, is overcome.

The device according to the present invention thus solves the problems highlighted with respect to the state of the art with a constructively simple, operatively efficient and reliable solution in terms of safety and resistance to wear.

## Claims

1. Regulator first stage for two-stage delivering assemblies, comprising
a first chamber (101) for a breathable high pressure gas, the chamber being connected or able to be connected through an inlet to a high pressure gas source;
a second chamber (201) for the breathable gas at an intermediate pressure, the intermediate-pressure gas chamber having an outlet for the intermediate pressure gas and being connected or able to be connected to a user of said intermediate pressure gas;
a pressure reducing valve which connects said first chamber (101) and said second chamber (201) with each other and the valve comprising a valve seat (301) having an opening for the communication between said first and said second chambers and a cut-off (311) cooperating with said valve seat (301) and displaceable from a closed position of said passage opening to an open position of said passage opening and vice versa,
said cut-off (311) being dynamically connected to a sensor member (402) exposed to the pressure of the external environment of said two chambers, the member (402) comprising a transmitting mechanism (321, 331) to transmit the mechanical stress exerted on said sensor member (402) by the pressure of the external environment of the cut-off (311) itself,
wherein said sensor member (402) sensing the external environment pressure, consists of at least one rigid element preferably and optionally of high mechanical strength (stainless steel or chromed brass) of movable wall which is sealingly slidable in a housing chamber (102), and which constitutes the interface wall of said housing chamber towards the external environment,
and wherein said transmitting mechanism (321, 331) connects said movable wall (402) with said cut-off (311),
wherein the sensor element sensing the external environment pressure consists of two movable wall elements which are spaced apart from each other thanks to mutual connecting means in parallel with the sliding direction, one of said movable wall elements constituting the interface with the external environment and the other one constituting the interface between the housing chamber of said two movable wall elements towards the intermediate-pressure chamber,
**characterised in that**
both said two movable wall elements sealingly delimit, respectively towards the external environment and towards the intermediate-pressure chamber, an interposition chamber which is insulated from the external environment and from the intermediate-pressure chamber and which consists of a housing chamber portion having variable position and whose extent, in the sliding direction of the two movable wall elements, substantially corresponds to the distance between said two movable wall elements.

2. Regulator first stage according to claim 1, wherein said sensor member and said housing chamber are of the cylinder/plunger type.

3. Regulator first stage according to claims 1 or 2, in which the sensor member formed by a plunger constitutes a movable base of the housing chamber formed by the cylinder, said sensor member being displaced inside said cylinder in parallel to itself and along the direction of the cylinder axis, said cylinder axis being at least parallel or coaxial to the displacement direction of the reducing-valve cut-off between said two opening and closing positions of the passage opening of the valve seat, the transmission members consisting of a rod connecting the sensor member with the cut-off.

4. Regulator first stage according to one or more of the preceding claims, wherein the axis of the passage opening of the valve seat is coincident with or parallel to the axis of the cylinder forming the housing chamber of the sensor member, while the cut-off consists of a sealing element mounted on a piston sliding in a cylindrical seat, the piston and the seat, i.e. the sliding direction of the cut-off, are parallel to or coincident with said axis of the passage opening of the valve seat and/or with the axis of the cylinder forming the housing chamber of the sensor member.

5. Regulator first stage according to one or more of the preceding claims, wherein the reducing valve cut-off is combined with an elastic pre-loading element.

6. Regulator first stage according to one or more of the preceding claims, wherein an elastic pre-loading element is combined with the sensor member too.

7. Regulator first stage according to one or more of the preceding claims, wherein a fluid, typically air, in the interposition chamber has a pressure set at a preset value and substantially invariable with respect to the pressure conditions of the external environment and of the high-pressure and intermediate-pressure chambers, preferably in the interposition chamber there is ambient air at atmospheric pressure.

8. Regulator first stage according to one or more of the preceding claims, wherein two movable wall elements are rigidly connected to each other, e.g. by means of a connecting rod of preset length.

9. Regulator first stage according to one or more of the preceding claims, wherein each of the movable walls is in the form of a plunger housed in a housing chamber acting as a cylinder, while both plungers are sealingly guided along the cylinder walls thanks to peripheral sealing gaskets, such as for example one or more O-rings or gaskets used in cylinder/plunger units.

10. Regulator first stage according to one or more of the preceding claims, wherein both said movable elements may be displaced inside said cylinder in parallel to themselves and in the direction of the cylinder axis, said cylinder axis being at least parallel or coaxial to the displacement direction of the reducing valve cut-off between said two opening and closing positions of the passage opening of the valve seat, the transmission members being constituted by a rod connecting the sensor member with the cut-off.

11. Regulator first stage according to one or more of the preceding claims, wherein the axis of the passage opening of the valve seat is coincident with or parallel to the axis of the cylinder forming the housing chamber of the sensor member, while the cut-off consists of a sealing element mounted on a piston sliding in a cylindrical seat, the piston and the seat, i.e. the sliding direction of the cut-off, are parallel to or coincident with said axis of the passage opening of the valve seat and/or with the axis of the cylinder forming the housing chamber of the two movable walls.

12. Regulator first stage according to one or more of the preceding claims, in which the high-pressure chamber, the intermediate-pressure chamber, the housing chamber, the pressure reducing valve seat and/or the passage opening in said seat, the piston-shaped cut-off and the guiding seat thereof, the two movable walls of the sensor member, the connecting rod between said sensor member and piston-shaped cut-off, all have a rotational symmetry and are coaxial with each other.

13. Regulator first stage according to one or more of the preceding claims, wherein the reducing valve cut-off is combined with an elastic pre-loading element.

14. Regulator first stage according to one or more of the preceding claims, wherein an elastic pre-loading element is also combined with the sensor member, said pre-loading element being advantageously positioned inside the interposition chamber delimited by the two movable wall elements.

15. Regulator first stage according to claim 14, wherein the elastic element acts on the element of movable-wall interfacing towards the intermediate-pressure chamber on the face of the movable wall element itself inside the interposition chamber and the stationary limit stop for said elastic pre-loading element is also arranged inside said interposition chamber and fixed or able to be fixed in a stable position in said interposition chamber, while it is provided with a passage opening for the rod connecting the two movable walls with each other.

16. Regulator first stage according to one or more of the preceding claims, wherein between the movable wall element forming the interface towards the external environment and said external environment there is a flexible membrane sealingly mounted at the end of the cylindrical housing chamber of said movable wall element.

17. Regulator first stage according to claim 16, wherein the movable wall element (402) constituting the interface towards the external environment, has no sliding sealing gaskets cooperating with the housing wall and is free to slide being guided along said wall, substantially without friction interference.

## Patentansprüche

1. Erste Stufe eines Reglers für zweistufige Abgabeanordnungen, umfassend
eine erste Kammer (101) für ein atembares Hochdruckgas, wobei die Kammer über einen Einlass mit einer Hochdruckgasquelle verbunden ist oder verbunden werden kann;
eine zweite Kammer (201) für das Atemgas unter einem Zwischendruck, wobei die Zwischendruck-Gaskammer einen Auslass für das Zwischendruck-Gas aufweist und mit einem Verbraucher des Zwischendruck-Gases verbunden ist oder verbunden werden kann;
ein Druckminderventil, das die erste Kammer (101) und die zweite Kammer (201) miteinander verbindet, wobei das Ventil einen Ventilsitz (301) mit einer Öffnung für die Kommunikation zwischen der ersten und der zweiten Kammer und ein Absperrorgan (311) umfasst, das mit dem Ventilsitz (301) zusammenarbeitet und von einer geschlossenen Position der Durchgangsöffnung zu einer offenen Position der Durchgangsöffnung und umgekehrt verstellbar ist,
wobei das besagte Absperrorgan (311) dynamisch mit einem Sensorelement (402) verbunden ist, das dem Druck der äußeren Umgebung der besagten zwei Kammern ausgesetzt ist, wobei das Element (402) einen Übertragungsmechanismus (321, 331) umfasst, um die mechanische Belastung zu übertragen, die durch den Druck der äußeren Umgebung des Absperrorgans (311) selbst auf das Sensorelement (402) ausgeübt wird,
wobei
das besagte den Außenumgebungsdruck erfassende Sensorelement (402) aus mindestens einem starren Element, vorzugsweise und optional von hoher mechanischer Festigkeit (rostfreier Stahl oder verchromtes Messing) einer beweglichen Wand besteht, die in einer Aufnahmekammer (102) abdichtend verschiebbar ist und die die Schnittstellenwand der besagten Gehäusekammer zur Außenumgebung bildet,
und wobei der Übertragungsmechanismus (321, 331) die bewegliche Wand (402) mit dem Absperrorgan (311) verbindet,
wobei das den Außenumgebungsdruck erfassende Sensorelement aus zwei beweglichen Wandelementen besteht, die über gegenseitige Verbindungsmittel parallel zur Verschieberichtung voneinander beabstandet sind, wobei eines der beweglichen Wandelemente die Schnittstelle mit der Außenumgebung und das andere die Schnittstelle zwischen der Aufnahmekammer der beiden beweglichen Wandelemente zur Zwischendruckkammer bildet,
**dadurch gekennzeichnet, dass**
die beiden beweglichen Wandelemente jeweils gegenüber der Außenumgebung und der Zwischendruckkammer eine Zwischenkammer abdichtend begrenzen, die von der Außenumgebung und der Zwischendruckkammer isoliert ist und die aus einem Aufnahmekammerabschnitt mit variabler Position besteht, dessen Erstreckung in der Verschieberichtung der beiden beweglichen Wandelemente im Wesentlichen dem Abstand zwischen diesen beiden beweglichen Wandelementen entspricht.

2. Erste Stufe eines Reglers nach Anspruch 1, wobei das Sensorelement und die Aufnahmekammer vom Zylinder-Kolbentyp sind.

3. Erste Stufe eines Reglers nach Anspruch 1 oder 2, bei dem das durch einen Kolben gebildete Sensorelement eine bewegliche Basis der durch den Zylinder gebildeten Aufnahmekammer bildet, wobei das Sensorelement im Inneren des Zylinders parallel zu sich selbst und in Richtung der Zylinderachse verlagert wird, wobei die Zylinderachse mindestens parallel oder koaxial zur Verlagerungsrichtung des Reduzierventil-Absperrorgans zwischen den beiden Öffnungs- und Schließpositionen der Durchgangsöffnung des Ventilsitzes verläuft, wobei die Übertragungselemente aus einer Stange bestehen, die das Sensorelement mit dem Absperrorgan verbindet.

4. Erste Stufe eines Reglers nach einem oder mehreren der vorhergehenden Ansprüche, wobei die Achse der Durchgangsöffnung des Ventilsitzes parallel zur oder zusammenfallend mit der Achse des die Aufnahmekammer des Sensorelements bildenden Zylinders verläuft, während das Absperrorgan aus einem Dichtungselement besteht, das auf einem in einem Zylindersitz verschiebbaren Kolben montiert ist, wobei der Kolben und der Sitz, d. h. die Verschieberichtung des Absperrorgans, parallel zur oder zusammenfallend mit der Achse der Durchgangsöffnung des Ventilsitzes und/oder mit der Achse des die Aufnahmekammer des Sensorelements bildenden Zylinders verlaufen.

5. Erste Stufe eines Reglers nach einem oder mehreren der vorhergehenden Ansprüche, wobei das Reduzierventil-Absperrorgan mit einem elastischen Vorspannelement kombiniert ist.

6. Erste Stufe eines Reglers nach einem oder mehreren der vorhergehenden Ansprüche, wobei ein elastisches Vorspannelement auch mit dem Sensorelement kombiniert ist.

7. Erste Stufe eines Reglers nach einem oder mehreren der vorhergehenden Ansprüche, wobei ein Fluid, in der Regel Luft, in der Zwischenkammer einen Druck aufweist, der auf einen voreingestellten Wert eingestellt und gegenüber den Druckverhältnissen der äußeren Umgebung und der Hoch- und Mitteldruckkammern im Wesentlichen unveränderlich ist, wobei sich in der Zwischenkammer vorzugsweise Umgebungsluft mit atmosphärischem Druck befindet.

8. Erste Stufe eines Reglers nach einem oder mehreren der vorhergehenden Ansprüche, wobei zwei bewegliche Wandelemente starr miteinander verbunden sind, z. B. durch eine Verbindungsstange mit vorgegebener Länge.

9. Erste Stufe eines Reglers nach einem oder mehreren der vorhergehenden Ansprüche, bei der jede der beweglichen Wände die Form eines Kolbens hat, der in einer als Zylinder wirkenden Aufnahmekammer untergebracht ist, wobei die beiden Kolben mit Hilfe von umlaufenden Dichtungen, wie z. B. einem oder mehreren O-Ringen oder in Zylinder-Kolben-Einheiten verwendeten Dichtungen, dichtend entlang der Zylinderwände geführt werden.

10. Erste Stufe eines Reglers nach einem oder mehreren der vorhergehenden Ansprüche, **dadurch gekennzeichnet, dass** die beiden beweglichen Elemente im Inneren des Zylinders parallel zueinander und in Richtung der Zylinderachse verschiebbar sind, wobei die Zylinderachse mindestens parallel oder koaxial zur Verschieberichtung des Reduzierventil-Absperrorgans zwischen den beiden Öffnungs- und Schließpositionen der Durchgangsöffnung des Ventilsitzes verläuft und die Übertragungselemente durch eine Stange gebildet werden, die das Sensorelement mit dem Absperrorgan verbindet.

11. Erste Stufe eines Reglers nach einem oder mehreren der vorhergehenden Ansprüche, **dadurch gekennzeichnet, dass** die Achse der Durchgangsöffnung des Ventilsitzes mit der Achse des den Aufnahmeraum des Fühlers bildenden Zylinders zusammenfällt oder parallel dazu verläuft, während das Absperrorgan aus einem Dichtungselement besteht, das auf einem in einem zylindrischen Sitz gleitenden Kolben montiert ist, wobei der Kolben und der Sitz, d. h. die Gleitrichtung des Absperrorgans, parallel zu der Achse der Durchgangsöffnung des Ventilsitzes und/oder zu der Achse des den Aufnahmeraum der beiden beweglichen Wände bildenden Zylinders verlaufen oder mit diesen zusammenfallen.

12. Erste Stufe eines Reglers nach einem oder mehreren der vorhergehenden Ansprüche, wobei die Achse der Durchgangsöffnung des Ventilsitzes parallel zu oder zusammenfallend mit der Achse des die Aufnahmekammer des Sensorelements bildenden Zylinders verläuft, während das Absperrorgan aus einem Dichtungselement besteht, das auf einem in einem Zylindersitz verschiebbaren Kolben montiert ist, wobei der Kolben und der Sitz, d. h. die Verschieberichtung des Absperrorgans, parallel zu oder zusammenfallend mit der Achse der Durchgangsöffnung des Ventilsitzes und/oder mit der Achse des die Aufnahmekammer der beiden beweglichen Wände bildenden Zylinders verlaufen.

13. Erste Stufe eines Reglers nach einem oder mehreren der vorhergehenden Ansprüche, wobei das Reduzierventil-Absperrorgan mit einem elastischen Vorspannelement kombiniert ist.

14. Erste Stufe eines Reglers nach einem oder mehreren der vorhergehenden Ansprüche, wobei ein elastisches Vorspannelement auch mit dem Sensorelement kombiniert ist, wobei das Vorspannelement vorteilhafterweise innerhalb der von den beiden beweglichen Wandelementen begrenzten Zwischenkammer angeordnet ist.

15. Erste Stufe eines Reglers nach Anspruch 14, wobei das elastische Element auf das bewegliche Wandelement wirkt, das als Schnittstelle mit der Zwischendruckkammer auf der Fläche des beweglichen Wandelements selbst innerhalb der Zwischenkammer dient, und der ortsfeste Anschlag für das elastische Vorspannelement ebenfalls innerhalb der Zwischenkammer angeordnet und in der Zwischenkammer lagestabil fixiert oder fixierbar ist und dabei mit einer Durchgangsöffnung für die die beiden beweglichen Wände miteinander verbindende Stange versehen ist.

16. Erste Stufe eines Reglers nach einem oder mehreren der vorhergehenden Ansprüche, wobei zwischen dem die Schnittstelle zur äußeren Umgebung bildenden beweglichen Wandelement und der äußeren Umgebung eine flexible Membran angeordnet ist, die am Ende der zylindrischen Aufnahmekammer des beweglichen Wandelements abdichtend angebracht ist.

17. Erste Stufe eines Reglers nach Anspruch 16, **dadurch gekennzeichnet, dass** das die Schnittstelle zur äußeren Umgebung bildende bewegliche Wandelement (402) keine mit der Gehäusewand zusammenwirkenden Gleitdichtungen aufweist und im Wesentlichen ohne Reibungsbehinderung frei an der Wand entlang gleitend geführt ist.

## Revendications

1. Premier étage de détendeur pour des ensembles de distribution à deux étages, comprenant
une première chambre (101) pour un gaz respirable à haute pression, la chambre étant connectée ou pouvant être connectée à travers une entrée à une source de gaz à haute pression;
une seconde chambre (201) pour un gaz respirable à une pression intermédiaire, la chambre à gaz à pression intermédiaire ayant une sortie pour le gaz à pression intermédiaire et étant connectée ou pouvant être connectée à un utilisateur dudit gaz à pression intermédiaire;
une valve de réduction de pression qui relie ladite première chambre (101) et ladite seconde chambre (201) entre elles et la valve comprenant un siège de valve (301) ayant une ouverture pour la communication entre ladite première et ladite seconde chambre et un obturateur (311) coopérant avec ledit siège de valve (301) et pouvant être déplacé d'une position fermée de ladite ouverture de passage à une position ouverte de ladite ouverture de passage et vice versa,
ledit obturateur (311) étant dynamiquement connecté à un élément capteur (402) exposé à la pression de l'environnement externe desdites deux chambres, l'élément (402) comprenant un mécanisme de transmission (321, 331) pour transmettre la contrainte mécanique exercée sur ledit élément capteur (402) par la pression de l'environnement externe de l'obturateur (311) lui-même,
dans lequel
ledit élément capteur (402) détectant la pression de l'environnement externe consistant de préférence d'au moins un élément rigide et éventuellement à haute résistance mécanique (acier inoxydable ou laiton chromé) d'une paroi mobile pouvant coulisser de manière étanche dans une chambre de logement (102) et qui constitue la paroi d'interface de ladite chambre de logement vers l'environnement externe, et dans lequel ledit mécanisme de transmission (321, 331) connecte ladite paroi mobile (402) avec ledit obturateur (311), dans lequel l'élément capteur détectant la pression de l'environnement externe consiste de deux éléments de paroi mobile qui sont espacés les uns des autres, grâce à des moyens de connexion réciproques, parallèlement à la direction de coulissement, l'un desdits éléments de paroi mobile constituant l'interface avec l'environnement externe et l'autre constituant l'interface entre la chambre de logement desdits deux éléments de paroi mobile vers la chambre à pression intermédiaire, **caractérise en ce que**
les deux dits éléments de paroi mobile délimitent de manière étanche, respectivement vers l'environnement externe et vers la chambre à pression intermédiaire, une chambre d'interposition qui est isolée de l'environnement externe et de la chambre à pression intermédiaire et qui consiste d'une portion de chambre de logement ayant une position variable et dont l'étendue, dans la direction de coulissement des deux éléments de paroi mobile, correspond essentiellement à la distance entre lesdits éléments de paroi mobile.

2. Premier étage de détendeur selon la revendication 1, dans lequel ledit élément capteur et ladite chambre de logement sont du type cylindre/plongeur.

3. Premier étage de détendeur selon la revendication 1 ou 2, dans lequel l'élément capteur formé par le plongeur constitue une base mobile de la chambre de logement formée par le cylindre, ledit élément capteur étant déplacé à l'intérieur dudit cylindre parallèlement à celui-ci et le long de la direction de l'axe du cylindre, ledit axe du cylindre étant au moins parallèle ou coaxial à la direction de déplacement de l'obturateur de la valve de réduction entre lesdites deux positions d'ouverture et de fermeture de l'ouverture de passage du siège de valve, les éléments de transmission consistant d'une tige connectant l'élément capteur avec l'obturateur.

4. Premier étage de détendeur selon l'une ou plusieurs des revendications précédentes, dans lequel l'axe de l'ouverture de passage du siège de la valve coïncide avec ou est parallèle à l'axe du cylindre formant la chambre de logement de l'élément capteur, tandis que l'obturateur consiste d'un élément d'étanchéité monté sur un piston coulissant dans un siège cylindrique, le piston et le siège, c.à.d. la direction de coulissement de l'obturateur, sont parallèles à ou coïncidents avec ledit axe d'ouverture de passage du siège de valve et/ou avec l'axe du cylindre formant la chambre de logement de l'élément capteur.

5. Premier étage de détendeur selon l'une ou plusieurs des revendications précédentes, dans lequel l'obturateur de la valve de réduction est associé à un élément de précontrainte élastique.

6. Premier étage de détendeur selon l'une ou plusieurs des revendications précédentes, dans lequel un élément de précontrainte élastique est également associé à l'élément capteur.

7. Premier étage de détendeur selon l'une ou plusieurs des revendications précédentes, dans lequel un fluide, typiquement de l'air, dans la chambre d'interposition présente une pression fixée à une valeur prédéfinie et sensiblement invariable par rapport aux conditions de pression de l'environnement externe et des chambres à haute pression et à pression intermédiaire, préférablement dans la chambre d'interposition il y a de l'air ambiant à la pression atmosphérique.

8. Premier étage de détendeur selon l'une ou plusieurs des revendications précédentes, dans lequel deux éléments de paroi mobile sont rigidement connectés entre eux, c.à.d. au moyen d'une tige de connexion d'une longueur prédéfinie.

9. Premier étage de détendeur selon l'une ou plusieurs des revendications précédentes, dans lequel chaque paroi mobile est sous la forme d'un plongeur logé dans une chambre de logement agissant comme un cylindre, tandis que les deux plongeurs sont guidés de manière étanche le long des parois du cylindre, grâce à des joints d'étanchéité périphériques, tels que par exemple un ou plusieurs joints toriques ou joints utilisés dans des unités de cylindre/plongeur.

10. Premier étage de détendeur selon l'une ou plusieurs des revendication précédentes, dans lequel les deux dits éléments mobiles peuvent être déplacés parallèlement entre eux à l'intérieur dudit cylindre et dans la direction de l'axe du cylindre, ledit axe du cylindre étant au moins parallèle ou coaxial à la direction de déplacement de l'obturateur de la valve de réduction entre lesdites deux positions d'ouverture et de fermeture de l'ouverture de passage du siège de valve, les éléments de transmission étant constitués d'une tige connectant l'élément capteur avec l'obturateur.

11. Premier étage de détendeur selon l'une ou plusieurs des revendications précédentes, dans lequel l'axe de l'ouverture de passage du siège de la valve coïncide avec ou est parallèle à l'axe du cylindre formant la chambre de logement de l'élément capteur, tandis que l'obturateur consiste d'un élément d'étanchéité monté sur un piston coulissant dans un siège cylindrique, le piston et le siège, c.à.d. la direction de coulissement de l'obturateur, sont parallèles à ou coïncidents avec ledit axe d'ouverture de passage du siège de valve et/ou avec l'axe du cylindre formant la chambre de logement des deux parois mobiles.

12. Premier étage de détendeur selon l'une ou plusieurs des revendications précédentes, dans lequel la chambre à haute pression, la chambre à pression intermédiaire, la chambre de logement, le siège de la valve de réduction de pression et/ou l'ouverture de passage dans ledit siège, l'obturateur à forme de piston et le siège de guidage de celui-ci, les deux parois mobiles de l'élément capteur, la tige de connexion entre ledit élément capteur et l'obturateur à forme de piston présentent tous une symétrie rotative et sont coaxiaux entre eux.

13. Premier étage de détendeur selon l'une ou plusieurs des revendications précédentes, dans lequel l'obturateur de la valve de réduction est associé à un élément de précontrainte élastique.

14. Premier étage de détendeur selon l'une ou plusieurs des revendications précédentes, dans lequel l'élément de précontrainte élastique est également associé avec l'élément capteur, ledit élément de précontrainte étant avantageusement positionné à l'intérieur de la chambre d'interposition délimitée par les deux éléments de paroi mobile.

15. Premier étage de détendeur selon la revendication 14, dans lequel l'élément élastique agit sur l'élément de paroi mobile en interface vers la chambre à pression intermédiaire sur la face de l'élément de paroi mobile lui-même à l'intérieur de la chambre d'interposition et la butée de fin de course stationnaire pour ledit élément de précontrainte élastique est également disposée à l'intérieur de ladite chambre d'interposition et fixée ou pouvant être fixée dans une position stable dans ladite chambre d'interposition, tandis qu'une ouverture de passage est prévue pour la tige connectant les deux parois mobiles entre elles.

16. Premier étage de détendeur selon l'une ou plusieurs des revendications précédentes, dans lequel il y a une membrane flexible montée de manière étanche à l'extrémité de la chambre de logement cylindrique dudit élément de paroi mobile entre l'élément de paroi mobile formant l'interface vers l'environnement externe et ledit environnement externe.

17. Premier étage de détendeur selon la revendication 16, dans lequel l'élément de paroi mobile (402) constituant l'interface vers l'environnement externe ne présente pas de joints d'étanchéité coulissant coopérants avec la paroi du logement et est libre de glisser en étant guidé le long de ladite paroi essentiellement sans interférence de friction.
